(19) Europäisches Patentamt / European Patent Office / Office européen des brevets

(11) **EP 4 398 438 A1**

(12) **EUROPEAN PATENT APPLICATION**
published in accordance with Art. 153(4) EPC

(43) Date of publication:
**10.07.2024 Bulletin 2024/28**

(51) International Patent Classification (IPC):
*H02J 3/46* (2006.01)     *H02J 3/28* (2006.01)
*H02J 3/00* (2006.01)     *H02J 3/24* (2006.01)
*H02J 7/00* (2006.01)

(21) Application number: 23817937.8

(22) Date of filing: 09.11.2023

(86) International application number:
**PCT/CN2023/130847**

(87) International publication number:
**WO 2024/104252 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 16.11.2022 CN 202211432485

(71) Applicants:
• **China Three Gorges Corporation
Wuhan, Hubei 430010 (CN)**
• **China Three Gorges Renewables (Group) Co.,
Ltd.
Beijing 101199 (CN)**
• **Tsinghua University
Beijing 100084 (CN)**

(72) Inventors:
• **SUO, Kelan
Wuhan, Hubei 430014 (CN)**
• **LI, Peng
Wuhan, Hubei 430014 (CN)**
• **CHENG, Lin
Wuhan, Hubei 430014 (CN)**
• **ZHANG, Ziyi
Wuhan, Hubei 430014 (CN)**
• **GUO, Yongshui
Wuhan, Hubei 430014 (CN)**
• **LIU, Shujun
Wuhan, Hubei 430014 (CN)**
• **ZHOU, Xuyan
Wuhan, Hubei 430014 (CN)**

(74) Representative: **Pfenning, Meinig & Partner mbB
Patent- und Rechtsanwälte
Joachimsthaler Straße 10-12
10719 Berlin (DE)**

(54) **SHARED ENERGY STORAGE SCHEDULING METHOD AND SYSTEM BASED ON ENERGY FREQUENCY MODULATION AND LOAD DEMAND**

(57) The present invention provides a shared energy storage scheduling method and system based on energy frequency regulation and load demand. The method includes: establishing an objective function of a shared energy storage system participating in cooperative scheduling of energy frequency regulation and load demand; inputting relevant parameters of a grid side, a user side and the shared energy storage system into the objective function; solving the objective function according to an objective function constraint condition and a switching cost of a load importance degree and in combination with a mixed integer linear programming algorithm, to obtain a shared energy storage configuration scheme; configuring the shared energy storage system according to the shared energy storage configuration scheme, and controlling the shared energy storage system to participate in energy cooperative scheduling of the grid side and the user side according to a hierarchical control strategy of the shared energy storage system. In the present invention, the shared energy storage system participates in the cooperative optimization scheduling of the grid side and the user side at the same time, and the service life of the shared energy storage system is improved through the hierarchical control strategy, which reflects the application value of the shared energy storage system and improves the utilization efficiency of the shared energy storage system.

EP 4 398 438 A1

Establishing an objective function of a shared energy storage system participating in cooperative scheduling of energy frequency regulation and load demand

S101

Inputting relevant parameters of a grid side, a user side and the shared energy storage system into the objective function

S102

Solving the objective function according to an objective function constraint condition and a switching cost of a load importance degree and in combination with a mixed integer linear programming algorithm, to obtain a shared energy storage configuration scheme based on energy frequency regulation and load demand

S103

Configuring the shared energy storage system according to the shared energy storage configuration scheme, and controlling the shared energy storage system to participate in energy cooperative scheduling of the grid side and the user side according to a hierarchical control strategy of the shared energy storage system

S104

FIG. 1

**Description**

The present application claims priority to Chinese Patent Application No. 202211432485.2, filed to China National Intellectual Property Administration on November 16, 2022 and entitled "SHARED ENERGY STORAGE SCHEDULING METHOD AND SYSTEM BASED ON ENERGY FREQUENCY REGULATION AND LOAD DEMAND", which is hereby incorporated by reference in its entirety.

**TECHNICAL FIELD**

The present invention relates to the technical field of energy storage and, in particular, to a shared energy storage scheduling method and system based on energy frequency regulation and load demand.

**BACKGROUND**

With promotion of a "double carbon" strategic goal, the installed capacity of a high proportion of renewable energy continues to rise, and the renewable energy is characterized by randomness, volatility, intermittency and the like, which brings many great challenges to frequency stabilization of an electrical power system and efficient use of energy. At the same time, in the context of a continuous rise of research heat of the "dual carbon" strategic goal, battery energy storage systems have developed on a large scale, and most battery energy storage systems have been idle for a long time, resulting in low utilization efficiency and poor economy.

In order to improve the utilization efficiency of the battery energy storage systems, a shared energy storage system is proposed. For the shared energy storage system, participating in grid-side frequency regulation and user-side energy optimization scheduling has become a hot research topic at home and abroad, but most studies have not explored cooperative optimization when the shared energy storage system participates in both the grid side and the user side, resulting in the whole system failing to make full use of existing renewable energy resources. In addition, cooperative optimization scheduling between the grid side and the user side will lead to frequent switching of a charging-discharging state of the shared energy storage system, which results in a rapid decline in rated capacity of the shared energy storage system, and will thus lead to unpredictable safety problems.

Therefore, a key to improve application value of the shared energy storage system and improve the efficiency of the energy storage system is to explore the cooperative optimization when the shared energy storage system participates in multiple scenarios (the grid side, the user side) at the same time.

**SUMMARY**

In view of the above problems, embodiments of the present invention provide a shared energy storage scheduling method and system based on energy frequency regulation and load demand, so as to overcome the above problems or at least partially solve the above problems.

A first aspect of the embodiments of the present invention discloses a shared energy storage scheduling method based on energy frequency regulation and load demand. The method includes:

establishing an objective function of a shared energy storage system participating in cooperative scheduling of energy frequency regulation and load demand;
inputting relevant parameters of a grid side, a user side and the shared energy storage system into the objective function;
solving the objective function according to an objective function constraint condition and a switching cost of a load importance degree and in combination with a mixed integer linear programming algorithm, to obtain a shared energy storage configuration scheme based on energy frequency regulation and load demand;
configuring the shared energy storage system according to the shared energy storage configuration scheme, and controlling the shared energy storage system to participate in energy cooperative scheduling of the grid side and the user side according to a hierarchical control strategy of the shared energy storage system.

Optionally, the establishing the objective function of the shared energy storage system participating in cooperative scheduling of energy frequency regulation and load demand includes:

determining an intraday return objective function of the shared energy storage system participating in energy cooperative scheduling of energy frequency regulation and load demand, where the intraday return objective function aims at a maximum intraday return of the shared energy storage system;
determining an intraday cost function of leasing shared energy storage on the user side and purchasing an amount of electricity from the grid side, where the intraday cost function aims at a lowest user intraday cost.

Optionally, the intraday return objective function of the shared energy storage system participating in energy cooperative scheduling of energy frequency regulation and load demand is expressed as:

$$S_{\text{efl}} = \max \sum_{t \in T_{\text{efl}}} \left[ \lambda_t^{\text{g}} \left( P_{\text{d},t}^{\text{ea}} - P_{\text{c},t}^{\text{ea}} \right) + \left( \lambda_{\text{up},t}^{\text{fr}} P_{\text{up},t}^{\text{fr}} + \lambda_{\text{down},t}^{\text{fr}} P_{\text{down},t}^{\text{fr}} \right) \right] +$$

$$\sum_{t \in T_{\text{efl}}} \sum_{i \in Z} \left[ \lambda_t^{\text{load}} \left( P_{\text{d},t}^i + P_{\text{c},t}^i \right) \right] - \frac{1}{365} \sum_{t \in T_{\text{ls}}} \sum_{i \in Z} C_{\text{ls},t}^i$$

where $S_{\text{efl}}$ is an intraday return of the shared energy storage system participating in grid energy frequency regulation and user-side energy optimization scheduling, $C_{\text{ls},t}^i$ is a load shedding cost of user i within time period t, $P_{\text{c},t}^{\text{ea}}$ and $P_{\text{d},t}^{\text{ea}}$ are respectively charging power and discharging power of the shared energy storage system participating in grid-side energy arbitrage in time period t, $P_{\text{up},t}^{\text{fr}}$ and $P_{\text{down},t}^{\text{fr}}$ are respectively up-standby power and down-standby power of the shared energy storage system participating in grid frequency regulation at time period t, $P_{\text{c},t}^i$ and $P_{\text{d},t}^i$ are respectively charging power and discharging power of the shared energy storage system participating in user i energy optimization scheduling at time period t, $T_{\text{efl}}$ is a total number of intraday scheduling time periods of the shared energy storage system participating in grid-side energy frequency regulation and user-side energy optimization scheduling, $T_{\text{1s}}$ is total utilization hours of load shedding within one year, Z is a total number of users, $\lambda_t^{\text{g}}$ is an electricity price of an electrical power system, $\lambda_{\text{up},t}^{\text{fr}}$ and $\lambda_{\text{down},t}^{\text{fr}}$ are respectively a service unit price of frequency up-regulation assistance and a service unit price of frequency down-regulation assistance for the shared energy storage system to participate in grid frequency regulation, and $\lambda_t^{\text{load}}$ is a service unit price of the shared energy storage system participating in the user-side energy optimization scheduling at moment t.

Optionally, the intraday cost function of leasing shared energy storage on the user side and purchasing an amount of electricity from the grid side is expressed as:

$$C_{\text{load}}^i = \min \sum_{t \in T_{\text{efl}}} \sum_{i \in Z} \left[ \lambda_t^{\text{load}} \left( P_{\text{d},t}^i + P_{\text{c},t}^i \right) + \lambda_t^{\text{g}} P_{\text{g},t}^i \right]$$

where $C_{\text{load}}^i$ is an intraday electricity cost of user i, $P_{g,t}$ is power purchased by user i from the grid side, $\lambda_t^{\text{g}}$ is an electricity price of an electrical power system, and Z is the total number of the users.

Optionally, the objective function constraint condition includes:

a first constraint condition, used to constrain charging-discharging power of the shared energy storage system and a power balance between the grid side and the user side, and to calculate rated power of the shared energy storage system;

a second constraint condition, used to constrain a state of charge of the shared energy storage system and to calculate rated capacity;

a third constraint condition, used to constrain frequency regulation capacity declaration of the shared energy storage system.

Optionally, the shared energy storage system includes two energy storage capacity apparatuses with same capacity which are a first energy storage capacity apparatus and a second energy storage capacity apparatus, where an initial state of the first energy storage capacity apparatus is charging, and an initial state of the second energy storage capacity apparatus is discharging;

the hierarchical control strategy of the shared energy storage system is a strategy of dynamically switching states of the first energy storage capacity apparatus and the second energy storage capacity apparatus in real-time according to a switching condition of the first energy storage capacity apparatus and the second energy storage capacity apparatus.

Optionally, the shared energy storage system includes two energy storage capacity apparatuses with same capacity which are a first energy storage capacity apparatus and a second energy storage capacity apparatus, where an initial state of the first energy storage capacity apparatus is charging, and an initial state of the second energy storage capacity apparatus is discharging; a switching condition includes:

switching charging-discharging states of the first energy storage capacity apparatus and the second energy storage capacity apparatus when a state of charge of the first energy storage capacity apparatus meets a maximum threshold and/or a state of charge of the second energy storage capacity apparatus meets a minimum threshold;

forcing the first energy storage capacity apparatus and the second energy storage capacity apparatus to stop working when the state of charge of the first energy storage capacity apparatus and the state of charge of the second energy storage capacity apparatus simultaneously reach the minimum threshold or simultaneously reach the maximum threshold.

Optionally, the method also includes:

in a case of power shortage, performing classification and grading according to a level of the load importance degree, and preferentially performing load shedding for a user with a low level of the load importance degree, where the load importance degree of each user is obtained by solving an evaluation index of the load importance degree through an order relation method of group evaluation.

Optionally, the method also includes:

establishing a net present value model of the shared energy storage system according to a cost model of the shared energy storage system and the intraday return objective function of the shared energy storage system participating in energy cooperative scheduling of energy frequency regulation and load demand;

calculating a net return of the shared energy storage system in a whole life cycle according to the net present value model of the shared energy storage system.

A second aspect of the embodiments of the present invention discloses a shared energy storage scheduling system based on energy frequency regulation and load demand. The system includes:

an establishing module, configured to establish an objective function of a shared energy storage system participating in cooperative scheduling of energy frequency regulation and load demand;

an input module, configured to input relevant parameters of a grid side, a user side and the shared energy storage system into the objective function;

a solving module, configured to solve the objective function according to an objective function constraint condition and a switching cost of a load importance degree and in combination with a mixed integer linear programming algorithm, to obtain a shared energy storage configuration scheme based on energy frequency regulation and load demand;

a scheduling module, configured to configure the shared energy storage system according to the shared energy storage configuration scheme, and to control the shared energy storage system to participate in energy cooperative scheduling of the grid side and the user side according to a hierarchical control strategy of the shared energy storage system.

The embodiments of the present invention include the following advantages.

In the embodiments of the present invention, the shared energy storage system participates in the cooperative optimization scheduling of the grid side and the user side at the same time. By constructing the objective function of the shared energy storage system participating in cooperative scheduling of energy frequency regulation and load demand, obtaining the shared energy storage configuration scheme based on energy frequency regulation and load demand by solving according to the objective function constraint condition and the switching cost of the load importance, and using the hierarchical control strategy to control the shared energy storage system to participate in energy cooperative scheduling of the grid side and the user side at the same time, the cooperative optimization scheduling of the shared energy storage in multiple scenarios is realized, which reflects the application value of the shared energy storage system and improves the utilization efficiency of the shared energy storage system. Due to a consideration of scheduling according to the load importance degree, it is more in line with needs of actual projects. The hierarchical control strategy of shared energy storage is adopted to achieve real-time dynamic switching of charging and discharging of the shared energy storage system, which reduces the number of times of switching of charging and discharging of the shared energy storage system, improves the service life of the shared energy storage system, and ensures the safety of the shared energy storage system.

**BRIEF DESCRIPTION OF DRAWINGS**

In order to more clearly state the technical solutions of embodiments of the present invention, the drawings required to be used in the description of the embodiments of the present invention are briefly introduced below. It is obvious that the drawings described below are only some embodiments of the present invention. For ordinary technical personnel in the field, other drawings can be obtained according to these drawings without any creative effort.

FIG. 1 is a step flow chart of a shared energy storage scheduling method based on energy frequency regulation and load demand provided by an embodiment of the present invention.
FIG. 2 is an application flow chart of a shared energy storage scheduling method based on energy frequency regulation and load demand provided by an embodiment of the present invention.
FIG. 3 is a schematic structural diagram of a shared energy storage scheduling system based on energy frequency regulation and load demand provided by an embodiment of the present invention.

**DESCRIPTION OF EMBODIMENTS**

In order to make the above purposes, characteristics and advantages of the present application more obvious and understandable, the technical solutions in embodiments of the present application will be clearly and completely described in combination with the accompanying drawings of the embodiments of the present application. Obviously, the described embodiments are a part of the embodiments of the present application, not all of them. Based on the embodiments in the present application, all other embodiments acquired by those of ordinary skills in the art without creative effort shall fall within the scope of protection of the present application.

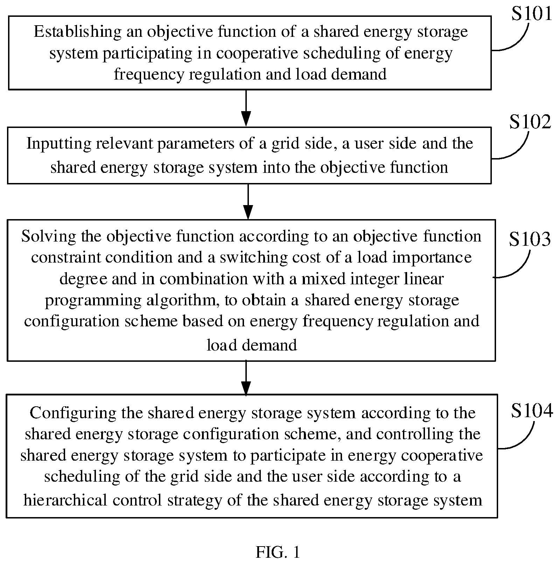

An embodiment of the present invention provides a shared energy storage scheduling method based on energy frequency regulation and load demand, as shown in FIG. 1. FIG. 1 is a step flow chart of a shared energy storage scheduling method based on energy frequency regulation and load demand provided by an embodiment of the present invention, including steps S101 to S104.

Step S101: establishing an objective function of a shared energy storage system participating in cooperative scheduling of energy frequency regulation and load demand.

The shared energy storage system refers to a battery energy storage system with charging and discharging functions. The shared energy storage system participates in energy cooperative optimization scheduling of a grid side and a user side at the same time. Specifically, the shared energy storage system participates in grid-side frequency up-regulation and down-regulation, that is, when the actual frequency of electric energy output at the grid side is higher or lower than the specified frequency, the frequency of electric energy output at the grid side is stabilized in a specified range by means of charging or discharging of the shared energy storage system; the shared energy storage system participates in grid-side energy arbitrage, that is, according to a change in the electricity price, the shared energy storage system is discharged for use by a load end during a time period of high electricity price, and the shared energy storage system is charged during a time period of low electricity price, so as to discharge for use by the load end during the period of high power price and to realize up-regulation of frequency through discharge in a frequency regulation service; the shared energy storage system participates in user-side energy optimization scheduling, that is, when an output electric quantity of new energy on the user side is higher than a load demand, the shared energy storage system is leased to store electric energy, and when a load is higher than the output electric quantity of new energy, the shared energy storage system is leased to release electric energy.

In this embodiment, in order to accurately configure rated power and rated capacity of the shared energy storage system that meet energy scheduling requirements and to maximize economic benefits of the shared energy storage system, the objective function of the shared energy storage system participating in cooperative scheduling of energy frequency regulation and load demand is established, and a specific shared energy storage scheduling scheme is solved out based on the objective function.

In an optional embodiment, the establishing the objective function of the shared energy storage system participating in cooperative scheduling of energy frequency regulation and load demand includes step A1 to step A2.

Step A1: determining an intraday return objective function of the shared energy storage system participating in energy cooperative scheduling of energy frequency regulation and load demand, where the intraday return objective function aims at a maximum intraday return of the shared energy storage system.

The intraday return objective function of the shared energy storage system participating in energy cooperative scheduling of energy frequency regulation and load demand is established according to a service unit price of participating in assistance to the grid-side frequency up- regulation and down-regulation, an electricity price of an electrical power system, a service unit price of participating in the user-side energy optimization scheduling, and a cost of load shedding according to a load importance degree. The intraday return objective function of the shared energy storage system participating in energy cooperative scheduling of energy frequency regulation and load demand includes: a return gained by the shared energy storage system by participating in grid frequency regulation, a return gained by the shared energy storage system by participating in grid energy arbitrage, a return of the shared energy storage system participating in the user-side energy optimization scheduling, and a cost generated by the load shedding of those with a low load importance degree in a case of power shortage of the whole system.

For example, the intraday return objective function of the shared energy storage system participating in energy cooperative scheduling of energy frequency regulation and load demand is expressed as:

$$S_{\text{efl}} = \max \sum_{t \in T_{\text{efl}}} \left[ \lambda_t^{\text{g}} \left( P_{\text{d},t}^{\text{ea}} - P_{\text{c},t}^{\text{ea}} \right) + \left( \lambda_{\text{up},t}^{\text{fr}} P_{\text{up},t}^{\text{fr}} + \lambda_{\text{down},t}^{\text{fr}} P_{\text{down},t}^{\text{fr}} \right) \right] +$$

$$\sum_{t \in T_{\text{efl}}} \sum_{i \in Z} \left[ \lambda_t^{\text{load}} \left( P_{\text{d},t}^i + P_{\text{c},t}^i \right) \right] - \frac{1}{365} \sum_{t \in T_{\text{ls}}} \sum_{i \in Z} C_{\text{ls},t}^i$$

where $S_{\text{efl}}$ is an intraday return of the shared energy storage system participating in grid energy frequency regulation and user-side energy optimization scheduling, $C_{\text{ls},t}^i$ is a load shedding cost of user i within time period t, $P_{\text{c},t}^{\text{ea}}$ and $P_{\text{d},t}^{\text{ea}}$ are respectively charging power and discharging power of the shared energy storage system participating in grid-side energy arbitrage in time period t, $P_{\text{up},t}^{\text{fr}}$ and $P_{\text{down},t}^{\text{fr}}$ are respectively up-standby power and down-standby power of the shared energy storage system participating in grid frequency regulation at time period t, $P_{\text{c},t}^i$ and $P_{\text{d},t}^i$ are respectively charging power and discharging power of the shared energy storage system participating in user i energy optimization scheduling at time period t, $T_{\text{efl}}$ is a total number of intraday scheduling time periods of the shared energy storage system participating in grid-side energy frequency regulation and user-side energy optimization scheduling, $T_{\text{ls}}$ is total utilization hours of load shedding within one year, Z is a total number of users, $\lambda_t^{\text{g}}$ is an electricity price of an electrical power system, $\lambda_{\text{up},t}^{\text{fr}}$ and $\lambda_{\text{down},t}^{\text{fr}}$ are respectively a service unit price of frequency up-regulation assistance and a service unit price of frequency down-regulation assistance for the shared energy storage system to participate in grid frequency regulation, and $\lambda_t^{\text{load}}$ is a service unit price of the shared energy storage system participating in the user-side energy optimization scheduling at moment t.

Step A2: determining an intraday cost function of leasing shared energy storage on the user side and purchasing an amount of electricity from the grid side, where the intraday cost function aims at a lowest user intraday cost.

In an actual application scenario, user i can lease the shared energy storage system to store electric energy when its output electric quantity of new energy is higher than the load demand, and lease the shared energy storage system to release electric energy when the load is higher than the output electric quantity of new energy. In addition, when considering leasing the shared energy storage system to store or release electric energy, the user i side also considers fluctuation of the electricity price. If a cost of leasing the shared energy storage system is higher than a cost of purchasing electricity from an upper grid, user i should purchase an amount of electricity from the upper grid during this period. Therefore, in order to enable the user to lease the shared energy storage system to participate in energy optimization scheduling, the cost of the user side should also be minimized when carrying out the energy cooperative scheduling. The cost of the user includes: a cost of purchasing the amount of electricity from the upper grid and a cost of leasing the shared energy storage system to participate in the energy optimization scheduling.

For example, the intraday cost function of leasing shared energy storage on the user side and purchasing an amount of electricity from the grid side is expressed as:

$$C_{\text{load}}^{i} = \min \sum_{t \in T_{\text{efl}}} \sum_{i \in Z} \left[ \lambda_{t}^{\text{load}} \left( P_{\text{d},t}^{i} + P_{\text{c},t}^{i} \right) + \lambda_{t}^{g} P_{\text{g},t}^{i} \right]$$

where $C_{\text{load}}^{i}$ is an intraday electricity cost of user i, $P_{\text{g},t}$ is power purchased by user i from the grid side, $\lambda_{t}^{g}$ is the electricity price of the electrical power system, and $Z$ is a total number of users.

In this embodiment, in order to accurately configure the rated power and the rated capacity of the shared energy storage system that meet energy scheduling requirements and to maximize economic benefits of the shared energy storage system, the objective function of the shared energy storage system participating in cooperative scheduling of energy frequency regulation and load demand is established, and a specific shared energy storage scheduling scheme is solved out based on the objective function in the following steps.

S102: inputting relevant parameters of the grid side, the user side and the shared energy storage system into the objective function.

In this embodiment, relevant parameters of the grid side include: power fluctuation data of the grid side (a frequency up-regulation signal and a frequency down-regulation signal on the grid side), an electricity price, a service unit price of participating in grid-side frequency regulation (including a service unit price of frequency up-regulation and a service unit price of frequency down-regulation), and a relevant parameter required by the load importance degree, etc. Relevant parameters of the user side include: user load demand power data, new energy output power data. Relevant parameters of the shared energy storage system include: charging-discharging efficiency of the shared energy storage system, upper and lower limits of the state of charge and other related parameters. Among them, the power fluctuation data of the grid side refers to actual output power data of the grid side within a day, and the user load demand power data refers to load demand power data of the user within a day. In the subsequent calculation process, the power fluctuation data of the grid side and the user load power data are coupled to obtain data of a final power change, then the shared energy storage system is configured according to the final power change.

S103: solving the objective function according to an objective function constraint condition and a switching cost of the load importance degree and in combination with a mixed integer linear programming algorithm, to obtain a shared energy storage configuration scheme based on energy frequency regulation and load demand.

In this embodiment, the switching cost of the load importance degree refers to a cost of load shedding by the shared energy storage system for those with the low load importance degree in the case of power shortage. When solving the objective function, the cost generated by load shedding needs to be taken into account, so as to obtain a more accurate shared energy storage configuration scheme. In the process of solving the objective function, a nonlinear constraint condition in the objective function constraint condition are converted into a mixed integer linear programming problem to solve the objective function. Specifically, by taking the objective function constraint condition as a constraint, the shared energy storage configuration scheme is solved out under a target situation of the maximum intraday return of the shared energy storage system and the lowest user intraday cost. The shared energy storage configuration scheme includes: rated power and rated capacity of the shared energy storage system, a return of each part of the shared energy storage system (i.e., a return gained by grid frequency regulation, a return gained by the shared energy storage system by participating in the grid-side energy arbitrage, a return of the shared energy storage system participating in the user-side energy optimization scheduling), a charging-discharging time period of the battery energy storage system (i.e., a time period of participating in the grid-side frequency up-regulation and down-regulation, a charging-discharging time period of participating in the grid energy arbitrage, a charging-discharging time period of participating in the user-side energy optimization scheduling), a service unit price and a user cost of the user leasing the shared energy storage for energy optimization scheduling, and the cost generated from the load shedding by the shared energy storage system for those with the low load importance degree in the case of power shortage of the whole system.

In an optional embodiment, the objective function constraint condition includes: a first constraint condition, a second constraint condition and a third constraint condition.

The first constraint condition is used to constrain charging-discharging power of the shared energy storage system and a power balance between the grid side and the user side, and to calculate the rated power of the shared energy storage system. For example, the first constraint condition can be expressed as:

$$0 \le P_{c,t}^{ea} + \sum_{i \in Z} P_{c,t}^{i} + \tau_{down,t} P_{down,t}^{fr} \le \psi_{c,t} P_{rate}$$

$$0 \le P_{d,t}^{ea} + \sum_{i \in Z} P_{d,t}^{i} + \tau_{up,t} P_{up,t}^{fr} \le \psi_{d,t} P_{rate}$$

$$P_{c,t}^{ea} + \tau_{down,t} P_{down,t}^{fr} + \sum_{i \in Z} (P_{c,t}^{i} + P_{load,t}^{i}) = P_{d,t}^{ea} + \tau_{up,t} P_{up,t}^{fr} + \sum_{i \in Z} (P_{d,t}^{i} + P_{g,t}^{i} + P_{res,t}^{i})$$

$$\psi_{c,t} + \psi_{d,t} \le 1$$

where $P_{res,t}^{i}$ is output power of new energy power of user i at time period t, $\tau_{up,t}$ and $\tau_{down,t}$ are respectively an energy coefficient of frequency up-regulation and an energy coefficient of frequency down-regulation on the grid side. $\psi_{c,t}$ and $\psi_{d,t}$ are respectively a charging state and a discharging state of the shared energy storage system. When $\psi_{c,t} = 1$, it means that the shared energy storage system is in the charging state at time period t, and $\psi_{d,t} = 0$. When $\psi_{d,t} = 1$, it means that the shared energy storage system is in the discharging state at time period t, and $\psi_{c,t} = 0$. $P_{c,t}^{i}$ and $P_{d,t}^{i}$ are respectively charging power and discharging power of the shared energy storage system participating in the energy optimization scheduling of user i at time period t. $P_{up,t}^{fr}$ and $P_{down,t}^{fr}$ are respectively up-standby power and down-standby power of the shared energy storage system participating in grid frequency regulation at time period t. $P_{c,t}^{ea}$ and $P_{d,t}^{ea}$ are respectively charging power and discharging power of the shared energy storage system participating in grid-side energy arbitrage at time period t.

The second constraint condition is used to constrain a state of charge of the shared energy storage system and to calculate rated capacity. For example, the second constraint condition can be expressed as:

$$SOC_{t} = SOC_{t-1} + \left( P_{c,t}^{ea} + \sum_{i \in Z} P_{c,t}^{i} + \tau_{down,t} P_{down,t}^{fr} \right) \eta_{c} / E_{rate}$$

$$- \left( P_{d,t}^{ea} + \sum_{i \in Z} P_{d,t}^{i} + \tau_{up,t} P_{up,t}^{fr} \right) / \eta_{d} E_{rate}$$

$$SOC_{0} = SOC_{T_{efl}+1}$$

$$\tau_{down,t} = \frac{1}{\Omega} \sum_{\varepsilon \in \Omega} \delta_{t,\varepsilon}^{-} \qquad \delta_{t,\varepsilon}^{-} \in [0,1]$$

$$\tau_{up,t} = \frac{1}{\Omega} \sum_{\varepsilon \in \Omega} \delta_{t,\varepsilon}^{+} \qquad \delta_{t,\varepsilon}^{+} \in [0,1]$$

where $SOC_{t}$ is a state of charge of the shared energy storage system at time period t, $SOC_{0}$ and $SOC_{T_{efl}+1}$ are respectively an initial state of charge and a state of charge **of** a next scheduling cycle of the shared energy storage system, $\Omega$ is a set of frequency regulation moments of the grid-side frequency regulation within scheduling period t, $\delta_{t,\varepsilon}^{+}$ and $\delta_{t,\varepsilon}^{-}$ are respectively a frequency up-regulation signal and a frequency down-regulation signal of a grid-side frequency regulation market at moment $\varepsilon$ in time period t.

The third constraint condition is used to constrain frequency regulation capacity declaration of the shared energy storage system. For example, the third constraint condition can be expressed as:

$$P_{\text{up},t}^{\text{fr}} = \begin{cases} P_{\text{rate}} - P_{\text{d},t}^{\text{ea}} & \psi_{\text{d},t} = 1 \\ P_{\text{c},t}^{\text{ea}} & \psi_{\text{c},t} = 1 \end{cases}$$

$$P_{\text{down},t}^{\text{fr}} = \begin{cases} P_{\text{rate}} - P_{\text{c},t}^{\text{ea}} & \psi_{\text{c},t} = 1 \\ P_{\text{d},t}^{\text{ea}} & \psi_{\text{d},t} = 1 \end{cases}$$

$$\begin{cases} 0 \le P_{\text{up},t}^{\text{fr}} \le \psi_{\text{d},t} P_{\text{rate}} - P_{\text{d},t}^{\text{ea}} + P_{\text{c},t}^{\text{ea}} \\ 0 \le P_{\text{down},t}^{\text{fr}} \le \psi_{\text{c},t} P_{\text{rate}} + P_{\text{d},t}^{\text{ea}} - P_{\text{c},t}^{\text{ea}} \end{cases} .$$

In this embodiment, in order to avoid frequent charging and discharging when the shared energy storage system participates in grid energy frequency regulation scheduling, a relationship between the frequency up-regulation and down-regulation power of the shared energy storage system and the charging and discharging power of grid energy arbitrage hours is limited. That is, frequent power fluctuations are converted to 1 hour. For example, there are two shared energy storage systems A and B. When there are 20 charging-discharging time periods with discontinuous charging-discharging states within 1 hour, only the shared energy storage system A is called to charge and only the shared energy storage system B is called to discharge within this 1 hour, thus avoiding frequent switching of the charging-discharging states of the shared energy storage systems caused by frequency power switching.

In this embodiment, the first constraint condition, the second constraint condition and the third constraint condition are taken as constraints, and the shared energy storage configuration scheme is solved out by combining the mixed integer linear programming algorithm under the target situation of the maximum intraday return of the shared energy storage system and the lowest user intraday cost.

S104: configuring the shared energy storage system according to the shared energy storage configuration scheme, and controlling the shared energy storage system to participate in energy cooperative scheduling of the grid side and the user side according to a hierarchical control strategy of the shared energy storage system.

In this embodiment, configuring the shared energy storage system according to the shared energy storage configuration scheme refers to configuring the rated power and the rated capacity of the shared energy storage system according to rated power and rated capacity. Controlling the shared energy storage system to participate in energy cooperative scheduling of the grid side and a power supply side refers to calling the shared energy storage system to charge and discharge in a corresponding time period according to the time period of the battery energy storage system participating in the grid-side frequency up-regulation and down-regulation, the charging-discharging time period of participating in the grid energy arbitrage, and the charging-discharging time period of participating in the user-side energy optimization scheduling. Specifically, the shared energy storage system is called to charge and discharge in the corresponding time period according to the hierarchical control strategy of the shared energy storage system.

In this embodiment, the shared energy storage configuration scheme is used to configure the shared energy storage system, and the hierarchical control strategy is used to control the shared energy storage system to participate in the energy cooperative scheduling of the grid side and the user side at the same time, thereby realizing the cooperative optimization scheduling of shared energy storage in multiple scenarios, and reflecting the application value of the shared energy storage system and improving the utilization efficiency of the shared energy storage system. In addition, since the shared energy storage hierarchical control strategy is adopted, the number of times of switching of charging and discharging of the shared energy storage system is reduced, the service life of the shared energy storage system is improved, and the safety of the shared energy storage system is ensured.

In an optional embodiment, the shared energy storage system includes two energy storage capacity apparatuses with same capacity which are a first energy storage capacity apparatus and a second energy storage capacity apparatus, where an initial state of the first energy storage capacity apparatus is charging, and an initial state of the second energy storage capacity apparatus is discharging;
the hierarchical control strategy of the shared energy storage system is a strategy of dynamically switching states of the first energy storage capacity apparatus and the second energy storage capacity apparatus in real-time according to a switching condition of the first energy storage capacity apparatus and the second energy storage capacity apparatus.

In this embodiment, in order to avoid frequent switching of charging and discharging of the shared energy storage system and to improve the reliability of the system, the rated capacity of the shared energy storage system is divided into two energy storage capacity apparatuses with the same capacity, that is, the first energy storage capacity apparatus and the second energy storage capacity apparatus, and both the first energy storage capacity apparatus and the second energy storage capacity apparatus have functions of charging and discharging. The initial state of the first energy storage capacity apparatus is charging, which means that an initial state of charge of the first energy storage capacity apparatus is minimum (an initial electric quantity is minimum), and the first energy storage capacity apparatus is called for charging at the beginning. That is, in cases that downward frequency regulation is required on the grid side, that the electric quantity needs to be stored when the electricity price is relatively low, and that the shared energy storage system needs to be leased to store energy when the output power of the user's new energy is greater than the load demand, the first energy storage capacity apparatus in the charging state is called to charge. The initial state of the second energy storage capacity apparatus is discharging, which means that an initial state of charge of the second energy storage capacity apparatus is maximum (an initial electric quantity is maximum), and the second energy storage capacity apparatus is called for discharging at the beginning. That is, in cases that upward frequency regulation is required on the grid side, that the electric energy is released for use when the electricity price is relatively high, and that the shared energy storage system needs to be leased to release electric energy for use when the output power of the user's new energy is less than the load demand, the second energy storage capacity apparatus in the discharging state is called to discharge.

In an actual application scenario, according to the charging-discharging time period of the shared energy storage system in the configuration scheme, the first energy storage capacity apparatus or the second energy storage capacity apparatus is called at the corresponding time point for charging-discharging, thereby avoiding infrequent switching of the charging-discharging state of shared energy storage, and realizing the shared energy storage participating in the energy cooperative optimization scheduling of the grid side and the user side. In addition, considering that with the calling of the first energy storage capacity apparatus and the second energy storage capacity apparatus (the shared energy storage system), the state of charge of the first energy storage capacity apparatus and the state of charge of the second energy storage capacity apparatus will change. When the state of charge of the first energy storage capacity apparatus in the charging state reaches the maximum, it is impossible to continue charging the first energy storage capacity apparatus. Or when the state of charge of the first energy storage capacity apparatus in the discharging state reaches the minimum, it is impossible to continue discharging the second energy storage capacity apparatus. Therefore, it is necessary to set a corresponding switching condition to realize the dynamic switching of the charge-discharge working states of the first energy storage capacity apparatus and the second energy storage capacity apparatus, so as to avoid frequent switching of charging and discharging of the shared energy storage system during the process of use, and ensure the safety of the shared energy storage system.

For example, the charging power of the first storage capacity apparatus at time period t and the discharging power of the second storage capacity apparatus at time period t are expressed as:

$$P_{c,t}^{1} = \begin{cases} P_{c,t}^{ea} + \sum_{i \in Z} P_{c,t}^{i} + \tau_{down,t} P_{down,t}^{fr} & SOC_{min} \leq SOC_{c,t}^{1} \leq SOC_{max} \\ 0 & SOC_{c,t}^{1} = SOC_{max} \end{cases}$$

$$P_{d,t}^{2} = \begin{cases} P_{d,t}^{ea} + \sum_{i \in Z} P_{d,t}^{i} + \tau_{up,t} P_{up,t}^{fr} & SOC_{min} \leq SOC_{d,t}^{2} \leq SOC_{max} \\ 0 & SOC_{d,t}^{2} = SOC_{min} \end{cases}$$

where $P_{c,t}^{1}$ and $P_{d,t}^{2}$ are respectively the charging power of the first energy storage capacity apparatus and the discharging power of the second energy storage capacity apparatus at time period t, $SOC_{c,t}^{1}$ and $SOC_{d,t}^{2}$ are respectively the state of charge of the first energy storage capacity apparatus and the state of charge of the second energy storage capacity apparatus at time period t, $SOC_{min}$ and $SOC_{max}$ are respectively the lowest and highest values of the state of charge of the shared energy storage system.

When the state of charge of the first energy storage capacity apparatus reaches the maximum, the first energy storage capacity apparatus cannot continue charging, and when the state of charge of the second energy storage capacity apparatus reaches the minimum, the second energy storage capacity apparatus cannot continue discharging. Therefore, the charging-discharging switching condition of the first energy storage capacity apparatus and the second energy storage capacity apparatus is set according to the state of charge.

Specifically, the switching condition includes:

switching charging-discharging states of the first energy storage capacity apparatus and the second energy storage capacity apparatus when the state of charge of the first energy storage capacity apparatus meets the maximum threshold and/or the state of charge of the second energy storage capacity apparatus meets the minimum threshold; forcing the first energy storage capacity apparatus and the second energy storage capacity apparatus to stop working when the state of charge of the first energy storage capacity apparatus and the state of charge of the second energy storage capacity apparatus simultaneously reach the minimum threshold or simultaneously reach the maximum threshold.

In this embodiment, the electric energy charged and discharged by the shared energy storage system may not be the same, since the electric energy for the grid-side frequency up-regulation and down-regulation, the electric energy charged and discharged for the grid arbitrage, and the electric energy charged and discharged for energy optimization scheduling by leasing the shared energy storage system by the user are random. That is, the electric energy charged by the first energy storage capacity apparatus and the electric energy discharged by the second energy storage capacity apparatus are not necessarily the same. When the state of charge of the first energy storage apparatus reaches the minimum, the state of charge of the second energy storage apparatus does not necessarily reach the maximum, or when the state of charge of the second energy storage apparatus reaches the maximum, the state of charge of the first energy storage apparatus does not necessarily reach the minimum. But as long as the state of charge of one energy storage capacity apparatus reaches the maximum or minimum, energy scheduling cannot continue. At this time, the charging-discharging working states of the two energy storage capacity apparatuses must be switched, that is, the first energy storage capacity apparatus in the charging state is switched to the discharge working state, and the second energy storage capacity apparatus in the discharging state is switched to the charging state. In addition, when the state of charge of the first energy storage capacity apparatus and the state of charge of the second energy storage capacity apparatus are detected to reach the minimum threshold or the maximum threshold at the same time, it is indicated that the shared energy storage system cannot continue charging or discharging, and cannot meet the needs of energy scheduling. Therefore, in order to ensure the safety of the system, the first energy storage capacity apparatus and the second energy storage capacity apparatus must be forced to stop working.

For example, the real-time dynamic switching condition of the first energy storage capacity apparatus and the first energy storage capacity apparatus can be expressed as: ① when $t_{SOC_{c,t}^1 = SOC_{max}} \neq t_{SOC_{d,t}^2 = SOC_{min}}$ or $t_{SOC_{c,t}^1 = SOC_{max}} = t_{SOC_{d,t}^2 = SOC_{min}}$, the first energy storage capacity apparatus and the first energy storage capacity apparatus switch the charging-discharging functions; (2) when the states of charge of the energy storage capacity apparatuses reach the lowest threshold $SOC_{min}$ or the highest threshold $SOC_{max}$ at the same time, the shared energy storage system is forced to stop working.

In an actual application scenario, the state of charge of the first energy storage capacity apparatus and the state of charge of the second energy storage capacity apparatus are monitored in real time, and the charging-discharging states of the first energy storage capacity apparatus and the second energy storage capacity apparatus are dynamically switched according to the real-time states of charge. Thus, frequent switching of charging and discharging of the shared energy storage system is avoided in the process of use, and the safety of the shared energy storage system is ensured.

In an optional embodiment, the shared energy storage scheduling method based on energy frequency regulation and load demand further includes: in the case of power shortage, performing classification and grading according to a level of the load importance degree, and preferentially performing load shedding for a user with a low level of the load importance degree, where the load importance degree of each user is obtained by solving an evaluation index of the load importance degree through an order relation method of group evaluation.

In this embodiment, the case of power shortage refers to a failure that the grid side cannot supply power to users due to a fault, thus causing the users to lack power. At this time, the shared energy storage system selects a user with a high level according to the load importance degree, and preferentially supplies power to the user with the high level. In the case of power shortage, in order to preferentially supply power to the user with the high level, it is necessary to perform load shedding for a user with a low level of the load importance degree (cut off the power supply to the user with the low level), which will thus generate a load shedding cost. For example, a load shedding cost function model is:

$$C_{ls,t}^i = k_1^i \left( P_{ls,t}^i \right)^2 + \left( k_2^i - k_4^i \right) P_{ls,t}^i + k_3^i$$

where $k_1^i$, $k_2^i$ and $k_3^i$ are constants, which can be determined through negotiation between a shared energy storage system enterprise and user i, $k_4^i$ is a compensation coefficient of an interrupt of an agreement between the shared energy storage system enterprise and user i, and $P_{ls,t}^i$ is load shedding power of user i at time period t.

In order to obtain the load importance degree of each user, three evaluation indexes of the load importance degree are established in this embodiment. The three evaluation indexes of the load importance degree are solved by an order relation method of group evaluation, and then the load importance degree of each user is obtained. Specifically, step B1 to step B2 are included.

Step B1: establishing importance degree evaluation indexes. The importance degree evaluation indexes include: a load density, a load rate and annual maximum load utilization hours, which are specifically expressed as follows.

(1) Load density $d^i$ refers to the load demand of the user side within a day and the total land area of a region where it is located, which is expressed as:

$$d^i = \frac{\sum_{t \in T_{efl}} P_{load,t}^i}{S^i}$$

where $d^i$ is the load density of user i, and $S^i$ is the land area of user i. A load density index is:

$$x_{d,i} = \frac{d^i}{d_{max}}$$

where $x_{d,i}$ is a load density assessment index of the user i side, and $d_{max}$ is the highest load density of the user i side.

(2) Load rate $\phi^i$ refers to a ratio between the average load and the maximum load of user i during a statistical period, expressed as:

$$\phi^i = \frac{P_{load,av}^i}{P_{load,max}^i}$$

where $\phi^i$ is the load rate of user i, $P_{load,av}^i$ is the average load demand of user i during the statistical period, and $P_{load,max}^i$ is the maximum load demand of user i during the statistical period.

A load rate assessment index is:

$$x_{\phi,i} = \frac{\phi^i}{\phi_{max}}$$

where $x_{\phi,i}$ is the load rate assessment index of the user i side, and $\phi_{max}$ is the highest load rate of the user i side.

(3) Annual maximum load utilization hours $TIU^i$ refer to the total time of electric quantity consumption of user i within a year.

An assessment index of annual maximum load utilization hours is:

$$x_{TIU,i} = \frac{TIU^i}{TIU_{max}}$$

where $x_{TIU,i}$ is the assessment index of annual maximum load utilization hours on the user i side, and $TIU_{max}$ is the

highest annual maximum load utilization hours on the user i side.

Step B2: solving the evaluation index of the load importance degree based on the order relation method of group evaluation.

Let an order relation of the evaluation indexes $x_{d,i}$, $x_{\phi,i}$, $x_{TIU,i}$ given by specialists $s_1,s_2,...,s_k$ be:

$$x_1^k > x_2^k > ... > x_m^k$$ , and a ratio between contribution degrees of each specialist giving adjacent evaluation indexes is $r_c^k$ . Therefore, weight values $\varpi_m^k$ of the evaluation indexes can be solved out by the order relation method, and the specific calculation is as follows:

$$\varpi_m^k = \left(1 + \sum_{c=2}^{m} \prod_{\upsilon=c}^{m} r_\upsilon^k\right)^{-1}$$

$$\varpi_{c-1}^k = r_c^k \varpi_c^k \qquad c = m, m-1,...,3,2 \ .$$

(1) Weight value $\partial_k$ of each specialist is calculated from a ranking relation of the evaluation indexes, which is expressed as:

$$\partial_k = \left| \frac{\mathrm{cov}\left(\overrightarrow{u}_k^T, \overrightarrow{u}^T\right)}{\sqrt{D(\overrightarrow{u}_k^T)}\sqrt{D(\overrightarrow{u}^T)}} \right|$$

where $\overrightarrow{u}_k^T = \left\{\varphi_1^k, \varphi_2^k,..., \varphi_m^k\right\}$ is a ranking value vector given by specialist $s_k$ for the evaluation indexes $x_{d,i}, x_{\phi,i}, x_{TIU,i}$ ;

$\overrightarrow{u}^T = \left\{\lambda_1, \lambda_2,..., \lambda_m\right\}$ is a comprehensive ranking value vector of the evaluation indexes $x_{d,i}$, $x_{\phi,i}$, $x_{TIU,i}$, and

$$\lambda_m = \frac{1}{n}\sum_{k\in n}\varphi_m^k$$ .

When $\partial_k = 1$ , it means that the specialists have the same information about the ranking issue of the evaluation indexes; when $\partial_k \leq 1$ , it means that the specialists have different information about the ranking relation of the evaluation indexes, at this time, the larger the $\partial_k$ is, the more information the specialist $s_k$ has on the evaluation indexes.

(2) The weight value of each specialist is calculated from weights of the evaluation indexes, which is expressed as:

$$\mu_k = \left| \frac{\mathrm{cov}\left(\overrightarrow{v}_k^T, \overrightarrow{v}^T\right)}{\sqrt{D(\overrightarrow{v}_k^T)}\sqrt{D(\overrightarrow{v}^T)}} \right|$$

where $\overrightarrow{v}_k^T = \left\{\varpi_1^k, \varpi_2^k,..., \varpi_m^k\right\}$ is a weight value vector that is given by the specialist $s_k$ for the evaluation indexes

$x_{d,i}, x_{\phi,i}, x_{TIU,i}$ and is solved out according to the order relation method, $\vec{v}^T = \{v_1, v_2, ..., v_m\}$ is a comprehensive

$$v_m = \frac{1}{n} \sum_{k \in n} \varpi_m^k$$

weight value vector of the evaluation indexes $x_{d,i}, x_{\phi,i}, x_{TIU,i}$, and .

When $\mu_k = 1$, it means that the specialists have the same information about the weight issue of the evaluation indexes; when $\mu_k \leq 1$, it means that the specialists have different information about the weight issue of the evaluation indexes, at this time, the larger the $\mu_k$ is, the more comprehensive information the specialist $s_k$ has on the weights of the evaluation indexes.

(3) The weight value $\xi_k$ of each specialist is as follows:

$$\xi_k = \frac{\partial_k \mu_k}{\sum_{k \in n} \partial_k \mu_k}$$

where $\xi_k$ being larger means that the specialist $s_k$ has more comprehensive information about the comprehensive evaluation index of the evaluation indexes, and $\xi_k$ being smaller means that the specialist $s_k$ has less information about the comprehensive evaluation index of the evaluation indexes.

A matrix $\beta^k$ of ratios of contribution degrees of the evaluation indexes given by each specialist is determined as:

$$\beta^k = \left\{ a_{lj}^k \right\} = \begin{pmatrix} a_{11}^k & a_{12}^k & \cdots & a_{1m}^k \\ a_{21}^k & a_{22}^k & \cdots & a_{2m}^k \\ \vdots & \vdots & & \vdots \\ a_{m1}^k & a_{m2}^k & \cdots & a_{mm}^k \end{pmatrix}$$

$$a_{lj}^k = \frac{\varpi_l^k}{\varpi_j^k}$$

where $\beta^k$ is a matrix of ratios of the ranking relations between the evaluation indexes $x_{d,i}, x_{\phi,i}, x_{TIU,i}$ given by the specialist $s_k$ to relative contribution degrees of adjacent evaluation indexes; $a_{lj}^k$ represents a ratio of the ranking relation between the evaluation indexes given by the specialist $s_k$ to the relative contribution degree of adjacent evaluation indexes.

$\beta^k$ is aggregated into a group judgment matrix $\beta$, which specifically is:

$$\beta = \left\{ a_{lj} \right\} = \begin{pmatrix} a_{11} & a_{12} & \cdots & a_{1m} \\ a_{21} & a_{22} & \cdots & a_{2m} \\ \vdots & \vdots & & \vdots \\ a_{m1} & a_{m2} & \cdots & a_{mm} \end{pmatrix}$$

$$a_{lj} = \prod_{k \in n} \left( a_{lj}^k \right)^{\xi_k}$$

According to the calculation expression of $a_{ij}$, the ratio of the comprehensive contribution degrees of the evaluation indexes $x_{d,i}, x_{\phi,i}, x_{TIU,i}$ can be determined as $r_c$, and then final weight values $\varpi_m$ of the evaluation indexes can be calculated through the above calculation expressions of the weight values $\varpi_m^k$ and $\varpi_{c-1}^k$ of the evaluation indexes.

A comprehensive evaluation value for determining the load importance degree is expressed as:

$$Y_i = \varpi_1 x_{d,i} + \varpi_2 x_{\phi,i} + \varpi_3 x_{TIU,i}$$

$Y_i$ is used to reflect the load importance degree of user i in a certain area. The greater the value of $Y_i$, the more important the user is, and vice versa. Therefore, if there is a lack of power, the load importance degree can be classified and graded, and load shedding is preferentially performed on those with a lower level and a low grade.

In this embodiment, there are many unpredictable safety and reliability problems when the shared energy storage system participates in the grid-side energy frequency regulation and the user-side energy optimization scheduling at the same time, for example, a system failure leads to a power shortage on the user side, etc. Therefore, by calculating the evaluation index of the load importance degree, when it can be determined that the system has unpredictable problems, the shared energy storage system can screen out the users with a priority of power supply, thus the shared energy storage system still provides a high utilization value to the society in the case of power shortage.

In an optional embodiment, the method also includes:

establishing a net present value model of the shared energy storage system according to a cost model of the shared energy storage system and the intraday return objective function of the shared energy storage system participating in energy cooperative scheduling of energy frequency regulation and load demand; calculating a net return of the shared energy storage system in a whole life cycle according to the net present value model of the shared energy storage system.

The net present value of the shared energy storage system can reflect whether the system is profitable when it participates in the grid energy frequency regulation and the user-side energy optimization scheduling. A specific expression is as follows:

$$S_{npv} = \sum_{t \in T_{lcc}} \sum_{d_{efl} \in D_{day,t}} \frac{S_{efl}}{(1+\gamma)^t} - C_{inv} - C_{o\&m} - C_{rest}$$

where $S_{npv}$ is a net present value of the shared energy storage system, $D_{day,t}$ is a number of operating days of the shared energy storage system in year $t$, $S_{efl}$ is an intraday return of the shared energy storage system participating in the grid energy frequency regulation and the user-side energy optimization scheduling, $\gamma$ represents a discount rate, $C_{inv}$ is an investment and construction cost of the shared energy storage system, $C_{o\&m}$ is a maintenance cost of the shared energy storage system, and $C_{rest}$ is a residual value recovery cost of the shared energy storage system.

Specifically, calculation of the costs of respective parts includes the following.

(1) Investment and construction cost $C_{inv}$: an integrated calculation of an initial construction cost and a replacement cost of the shared energy storage system, referred to as an investment and construction cost, expressed as:

$$C_{inv} = C_p P_{rate} + \sum_{\kappa=0}^{K} C_e E_{rate} (1+\gamma)^{-[\kappa T_{lcc}/(K+1)]}$$

where $C_e$ and $C_p$ are respectively a cost unit price of the rated capacity and a cost unit price of the rated power of the shared energy storage system, K is the number of times of replacement of the shared energy storage system, and $T_{lcc}$ is total operating years of a shared energy storage project.

(2) Maintenance cost $C_{o\&m}$, which is mainly a relevant maintenance cost paid to ensure the normal operation of the shared energy storage system, expressed as:

$$C_{\text{o\&m}} = C_{\text{p,o\&m}} P_{\text{rate}} \frac{(1+\gamma)^{T_{\text{lcc}}} - 1}{\gamma(1+\gamma)^{T_{\text{lcc}}}}$$

where $C_{\text{p,o\&m}}$ is a cost unit price of power maintenance of the shared energy storage system.

(3) Residual value recovery cost $C_{\text{rest}}$: when the shared energy storage system does not have the ability to participate in scheduling, it needs to be replaced or scrapped for recovery, and at this time, the shared energy storage system still has certain value, so the residual value recovery cost is expressed as:

$$C_{\text{rest}} = -\beta_{\text{rest}} C_{\text{inv}}$$

where $\beta_{\text{rest}}$ is a recovery value coefficient of the shared energy storage system.

In this embodiment, the net return of the shared energy storage system during the entire operation period of the project is calculated in combination with the cost model of the shared energy storage system and the intraday return objective function of the shared energy storage system participating in energy cooperative scheduling of energy frequency regulation and load demand (i.e., the intraday return of the shared energy storage system).

In an optional embodiment, a capacity attenuation rate of the shared energy storage system can also be obtained according to the objective function of the shared energy storage system participating in cooperative scheduling of energy frequency regulation and load demand and in combination with an attenuation function model of the shared energy storage system and the objective function constraint condition, and then the number of times of replacement of the shared energy storage system can be obtained according to the capacity attenuation rate of the shared energy storage system.

Specifically, the attenuation function model of shared energy storage system mainly includes two parts: one is a model of a capacity attenuation of the shared energy storage system caused by electric quantity of charging and discharging; the other is a model of the capacity of the shared energy storage system decreasing gradually with the increase of the operating time of the shared energy storage system. Therefore, a function expression of the capacity attenuation rate of the shared energy storage system is expressed as:

$$\ell_{\text{de}} = \begin{cases} \dfrac{N_1^{\text{D}} \eta_{\text{c}} P_{\text{c},t} \Delta t}{E_{\text{rate}}} \left( \alpha_l \dfrac{P_{\text{c},t}}{P_{\text{rate}}} + b_l \right) + \chi_l T_1^{\text{cal}} \Delta t \\[4mm] \dfrac{N_1^{\text{D}} P_{\text{d},t} \Delta t}{\eta_{\text{d}} E_{\text{rate}}} \left( \alpha_l \dfrac{P_{\text{d},t}}{P_{\text{rate}}} + b_l \right) + \chi_l T_1^{\text{cal}} \Delta t \end{cases}$$

where $\ell_{\text{de}}$ is a capacity attenuation rate of the shared energy storage system, $N_1^{\text{D}}$ is an aging rate of the shared energy storage system when a discharge depth is equal to 1, $P_{\text{c},t}$ and $P_{\text{d},t}$ are respectively the charging power and the discharging power of the shared energy storage system at time period t, $E_{\text{rate}}$ and $P_{\text{rate}}$ are respectively the rated capacity and the rated power of the shared energy storage system, $\eta_{\text{c}}$ and $\eta_{\text{d}}$ respectively represent a charging conversion efficiency and a discharging conversion efficiency of the shared energy storage system, $T_1^{\text{cal}}$ is a calendar aging rate corresponding to operating time of the shared energy storage system at stage $l$, $\alpha_l$ and $b_l$ are respectively a parameter of a linear function of charge aging and a parameter of a linear function of discharge aging of the shared energy storage system at stage $l$, $\chi_l$ is a calendar aging coefficient corresponding to operating time of the shared energy storage system at stage $l$, $\Delta t$ is a scheduling time interval of the shared energy storage system, where $\Delta t = 1h$ in this embodiment. When the capacity attenuation rate of the shared energy storage system is $\ell_{\text{de}} = 0.2$, the shared energy storage system replaces a battery once, $K = 1$.

In this embodiment, the shared energy storage system participates in the cooperative optimization scheduling of the grid side and the user side at the same time. The objective function of the shared energy storage system participating in the cooperative scheduling of energy frequency regulation and load demand is constructed, and the relevant parameters of the grid side, the user side and the shared energy storage system are input into the objective function. According to the objective function constraint condition and the switching cost of the load importance degree, the shared energy storage scheduling scheme based on energy frequency regulation and load demand is solved out, and a hierarchical control strategy is used to control the shared energy storage system to participate in the energy cooperative scheduling of the grid side and the user side at the same time, thus realizing the cooperative optimization scheduling of shared energy storage in multiple scenarios, which reflects the application value of the shared energy storage system and improves the utilization efficiency of the shared energy storage system. Because the shared energy storage hierarchical control strategy is adopted, the real-time dynamic switching of charging and discharging of the shared energy storage system is realized, which reduces the number of times of switching of charging and discharging of the shared energy storage system, improves the service life of the shared energy storage system, and ensures the safety of the shared energy storage system. At the same time, by calculating the evaluation index of the load importance degree, when it can be determined that when the system has unpredictable problems, the shared energy storage system can screen out the users the priority of power supply, thus the shared energy storage system still provides a high utilization value to the society in the case of power shortage.

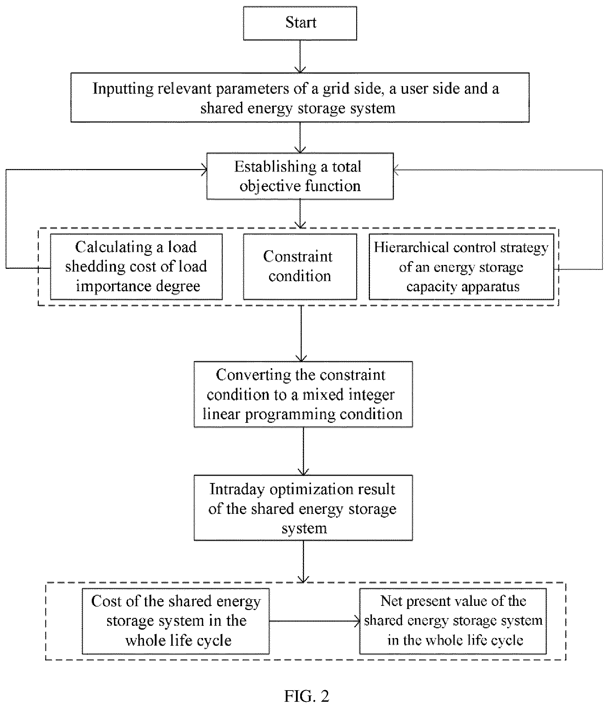

For example, as shown in FIG. 2, FIG. 2 is an application flow chart of a shared energy storage scheduling method based on energy frequency regulation and load demand provided by an embodiment of the present invention. In an actual application scenario, a process of a shared energy storage system participating in energy optimization scheduling of energy frequency regulation and load demand at the same time is as follows.

First of all, relevant parameters of a grid side, a user side and the shared energy storage system are input. That is, for the grid side, power fluctuation data of the grid side (a frequency up-regulation signal and a frequency down-regulation signal), a service unit price of participating in grid-side frequency regulation, and an electricity price are input. User load demands, new energy output power, relevant parameters required by a load importance degree and the like are input. In terms of the shared energy storage system, it is necessary to input battery charging-discharging efficiency, upper and lower limits of the state of charge, a service price of shared energy storage assistance, a battery cost, and parameters related to capacity attenuation.

Secondly, an objective function of the shared energy storage system participating in cooperative scheduling of energy frequency regulation and load demand (including: an intraday return objective function of the shared energy storage system participating in energy cooperative scheduling of energy frequency regulation and load demand, an intraday cost function of leasing shared energy storage on the user side and purchasing an amount of electricity from the grid side) is established under the guidance of a frequency regulation price, an electricity price, a service unit price of participating in grid-side frequency regulation, a service unit price of participating in user-side energy optimization scheduling, and a load shedding cost. Among them, the intraday return objective function of the shared energy storage system participating in energy cooperative scheduling of energy frequency regulation and load demand aims at the maximum intraday return of the shared energy storage system, and this objective function includes a return gained by the shared energy storage system by participating in the grid frequency regulation, a return gained by the shared energy storage system by participating in grid energy arbitrage, the shared energy storage system participating in the user-side energy optimization scheduling, and a cost generated from load shedding by the shared energy storage system for those with a low load importance degree in a case of power shortage of the whole system. The intraday cost function of leasing shared energy storage on the user side and purchasing the amount of electricity from the grid side aims at the lowest user intraday cost.

Then, constraint conditions related to the objective function are established, and a nonlinear constraint condition in the constraint conditions is converted into a mixed integer linear programming problem. In addition, based on the total capacity, the shared energy storage system is divided into two energy storage capacity apparatuses with the same capacity, namely, an energy storage capacity apparatus A and an energy storage capacity apparatus B. The energy storage capacity apparatus A is charging, and the energy storage capacity apparatus B is discharging. A switching condition of functions of the energy storage capacity apparatus A and the energy storage capacity apparatus B is set. The real-time dynamic switching of the energy storage capacity apparatus A and the energy storage capacity apparatus B can be realized according to a hierarchical control strategy of the shared energy storage system, which reduces the number of times of switching of charging and discharging of the shared energy storage system, and thus improves the service life of the shared energy storage system.

In addition, in order to let the shared energy storage system in still providing a higher utilization value to the society in the case of power shortage, a comprehensive evaluation value of the load importance degree is calculated to screen out those with a comprehensive evaluation value of the low load importance for preferentially performing load shedding. A load shedding cost function is established to calculate the load shedding cost of the shared energy storage system. Finally, a net return of the shared energy storage system during the entire operation period of a project is calculated in combination with a cost model of the shared energy storage system.

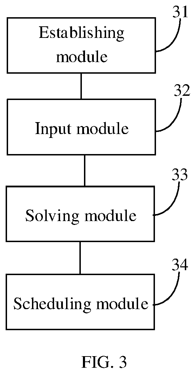

As shown in FIG. 3, FIG. 3 is a schematic structural diagram of a shared energy storage scheduling system based on energy frequency regulation and load demand provided by an embodiment of the present invention. As shown in FIG. 3, the system includes:

an establishing module 31, configured to establish an objective function of a shared energy storage system participating in cooperative scheduling of energy frequency regulation and load demand;
an input module 32, configured to input relevant parameters of a grid side, a user side and the shared energy storage system into the objective function;
a solving module 33, configured to solve the objective function according to an objective function constraint condition and a switching cost of a load importance degree and in combination with a mixed integer linear programming algorithm, to obtain a shared energy storage configuration scheme based on energy frequency regulation and load demand;
a scheduling module 34, configured to configure the shared energy storage system according to the shared energy storage configuration scheme, and to control the shared energy storage system to participate in energy cooperative scheduling of the grid side and the user side according to a hierarchical control strategy of the shared energy storage system.

In an optional embodiment, the establishing module includes:

a first sub-module of the establishing module, configured to determine an intraday return objective function of the shared energy storage system participating in energy cooperative scheduling of energy frequency regulation and load demand, where the intraday return objective function aims at a maximum intraday return of the shared energy storage system;
a second sub-module of the establishing module, configured to determine an intraday cost function of leasing shared energy storage on the user side and purchasing an amount of electricity from the grid side, where the intraday cost function aims at a lowest user intraday cost.

In an optional embodiment, the solving module includes:

a first constraint condition sub-module, configured to determine a first constraint condition, where the first constraint condition is used to constrain charging-discharging power of the shared energy storage system and a power balance between the grid side and the user side, and to calculate rated power of the shared energy storage system;
a second constraint condition sub-module, configured to determine a second constraint condition, where the second constraint condition is used to constrain a state of charge of the shared energy storage system and to calculate rated capacity;
a third constraint condition sub-module, configured to determine a third constraint condition, where the third constraint condition is used to constrain frequency regulation capacity declaration of the shared energy storage system.

In an optional embodiment, the shared energy storage system includes two energy storage capacity apparatuses with same capacity which are a first energy storage capacity apparatus and a second energy storage capacity apparatus, where an initial state of the first energy storage capacity apparatus is charging, and an initial state of the second energy storage capacity apparatus is discharging; the scheduling module also includes:

a first switching module, configured to switch charging-discharging states of the first energy storage capacity apparatus and the second energy storage capacity apparatus when a state of charge of the first energy storage capacity apparatus meets a maximum threshold and/or a state of charge of the second energy storage capacity apparatus meets a minimum threshold.
a second switching module, configured to force the first energy storage capacity apparatus and the second energy storage capacity apparatus to stop working when the state of charge of the first energy storage capacity apparatus and the state of charge of the second energy storage capacity apparatus simultaneously reach the minimum threshold or simultaneously reach the maximum threshold.

In an optional embodiment, the system also includes:
a load shedding module, configured to perform classification and grading according to a level of the load importance degree and to preferentially perform load shedding for a user with a low level of the load importance degree in a case of power shortage, where the load importance degree of each user is obtained by solving an evaluation index of the load importance degree through an order relation method of group evaluation.
In an optional embodiment, the system also includes:

a net present value model establishing module, configured to establish a net present value model of the shared energy storage system according to a cost model of the shared energy storage system and the intraday return objective function of the shared energy storage system participating in energy cooperative scheduling of energy frequency regulation and load demand;
a net present value calculating module, configured to calculate a net return of the shared energy storage system in a whole life cycle according to the net present value model of the shared energy storage system.

The embodiments in this specification are described in a progressive manner, and each embodiment focuses on its differences from other embodiments. The same and similar parts of the embodiments can be referred to for each other.

Although preferred embodiments of the present application have been described, these embodiments may be subject to additional changes and modifications once the basic creative concepts are known to those skilled in the art. Accordingly, the attached claims are intended to be construed to include preferred embodiments and all changes and modifications falling within the scope of embodiments of the present application.

Finally, it should be noted that relational terms such as first, second and so on herein are used only to distinguish one entity or operation from another and do not necessarily require or imply any such actual relationship or order between these entities or operations. Furthermore, the term "include", "contain" or any other variation thereof is intended to cover non-exclusive inclusion, so that a process, method, article or terminal device including a set of elements includes not only those elements, but also other elements not expressly listed, or elements inherent to such process, method, article or terminal device. In the absence of further restrictions, an element qualified by the sentence "including a..." does not preclude the existence of additional identical elements in a process, method, article or terminal device including the element.

The shared energy storage scheduling method and system based on energy frequency regulation and load demand provided in the present application are introduced in detail. Specific examples are used herein to explain the principles and implementations of the present application. The illustration of the above embodiments is only used to help understand the methods of the present application and their core ideas. At the same time, for those of ordinary skills in the art, according to the ideas of the present application, there will be changes in the specific implementations and scope of application. In summary, the content of this specification should not be understood as a limitation on the present application.

## Claims

1. A shared energy storage scheduling method based on energy frequency regulation and load demand, wherein the method comprises:

    establishing an objective function of a shared energy storage system participating in cooperative scheduling of energy frequency regulation and load demand;
    inputting relevant parameters of a grid side, a user side and the shared energy storage system into the objective function;
    solving the objective function according to an objective function constraint condition and a switching cost of a load importance degree and in combination with a mixed integer linear programming algorithm, to obtain a shared energy storage configuration scheme based on energy frequency regulation and load demand;
    configuring the shared energy storage system according to the shared energy storage configuration scheme, and controlling the shared energy storage system to participate in energy cooperative scheduling of the grid side and the user side according to a hierarchical control strategy of the shared energy storage system.

2. The method according to claim 1, wherein the establishing the objective function of the shared energy storage system participating in cooperative scheduling of energy frequency regulation and load demand comprises;

    determining an intraday return objective function of the shared energy storage system participating in energy cooperative scheduling of energy frequency regulation and load demand, wherein the intraday return objective function aims at a maximum intraday return of the shared energy storage system;
    determining an intraday cost function of leasing shared energy storage on the user side and purchasing an amount of electricity from the grid side, wherein the intraday cost function aims at a lowest user intraday cost.

3. The method according to claim 2, wherein the intraday return objective function of the shared energy storage system participating in energy cooperative scheduling of energy frequency regulation and load demand is expressed as:

$$S_{\text{efl}} = \max \sum_{t \in T_{\text{efl}}} \left[ \lambda_t^{\text{g}} \left( P_{\text{d},t}^{\text{ea}} - P_{\text{c},t}^{\text{ea}} \right) + \left( \lambda_{\text{up},t}^{\text{fr}} P_{\text{up},t}^{\text{fr}} + \lambda_{\text{down},t}^{\text{fr}} P_{\text{down},t}^{\text{fr}} \right) \right] +$$

$$\sum_{t \in T_{\text{efl}}} \sum_{i \in Z} \left[ \lambda_t^{\text{load}} \left( P_{\text{d},t}^i + P_{\text{c},t}^i \right) \right] - \frac{1}{365} \sum_{t \in T_{\text{ls}}} \sum_{i \in Z} C_{\text{ls},t}^i$$

wherein $S_{\text{efl}}$ is an intraday return of the shared energy storage system participating in grid energy frequency regulation and user-side energy optimization scheduling, $C_{\text{ls},t}^i$ is a load shedding cost of user i within time period t, $P_{\text{c},t}^{\text{ea}}$ and $P_{\text{d},t}^{\text{ea}}$ are respectively charging power and discharging power of the shared energy storage system participating in grid-side energy arbitrage in time period t, $P_{\text{up},t}^{\text{fr}}$ and $P_{\text{down},t}^{\text{fr}}$ are respectively up-standby power and down-standby power of the shared energy storage system participating in grid frequency regulation at time period t, $P_{\text{c},t}^i$ and $P_{\text{d},t}^i$ are respectively charging power and discharging power of the shared energy storage system participating in user i energy optimization scheduling at time period t, $T_{\text{efl}}$ is a total number of intraday scheduling time periods of the shared energy storage system participating in grid-side energy frequency regulation and user-side energy op-timization scheduling, $T_{\text{ls}}$ is total utilization hours of load shedding within one year, $Z$ is a total number of users, $\lambda_t^{\text{g}}$ is an electricity price of an electrical power system, $\lambda_{\text{up},t}^{\text{fr}}$ and $\lambda_{\text{down},t}^{\text{fr}}$ are respectively a service unit price of frequency up-regulation assistance and a service unit price of frequency down-regulation assistance for the shared energy storage system to participate in grid frequency regulation, and $\lambda_t^{\text{load}}$ is a service unit price of the shared energy storage system participating in the user-side energy optimization scheduling at moment t.

4. The method according to claim 2, wherein the intraday cost function of leasing shared energy storage on the user side and purchasing an amount of electricity from the grid side is expressed as:

$$C_{\text{load}}^i = \min \sum_{t \in T_{\text{efl}}} \sum_{i \in Z} \left[ \lambda_t^{\text{load}} \left( P_{\text{d},t}^i + P_{\text{c},t}^i \right) + \lambda_t^{\text{g}} P_{\text{g},t}^i \right]$$

wherein $C_{\text{load}}^i$ is an intraday electricity cost of user i, $P_{\text{g},t}$ is power purchased by user i from the grid side, $\lambda_t^{\text{g}}$ is an electricity price of an electrical power system, and $Z$ is the total number of the users.

5. The method according to claim 1, wherein the objective function constraint condition comprises:

a first constraint condition, used to constrain charging-discharging power of the shared energy storage system and a power balance between the grid side and the user side, and to calculate rated power of the shared energy storage system;
a second constraint condition, used to constrain a state of charge of the shared energy storage system and to calculate rated capacity;
a third constraint condition, used to constrain frequency regulation capacity declaration of the shared energy storage system.

6. The method according to claim 1, wherein the shared energy storage system comprises two energy storage capacity apparatuses with same capacity which are a first energy storage capacity apparatus and a second energy storage capacity apparatus, wherein an initial state of the first energy storage capacity apparatus is charging, and an initial state of the second energy storage capacity apparatus is discharging;

the hierarchical control strategy of the shared energy storage system is a strategy of dynamically switching states of the first energy storage capacity apparatus and the second energy storage capacity apparatus in real-time according to a switching condition of the first energy storage capacity apparatus and the second energy storage capacity apparatus.

7. The method according to claim 1, wherein the shared energy storage system comprises two energy storage capacity apparatuses with same capacity which are a first energy storage capacity apparatus and a second energy storage capacity apparatus, wherein an initial state of the first energy storage capacity apparatus is charging, and an initial state of the second energy storage capacity apparatus is discharging; a switching condition comprises:

switching charging-discharging states of the first energy storage capacity apparatus and the second energy storage capacity apparatus when a state of charge of the first energy storage capacity apparatus meets a maximum threshold and/or a state of charge of the second energy storage capacity apparatus meets a minimum threshold;

forcing the first energy storage capacity apparatus and the second energy storage capacity apparatus to stop working when the state of charge of the first energy storage capacity apparatus and the state of charge of the second energy storage capacity apparatus simultaneously reach the minimum threshold or simultaneously reach the maximum threshold.

8. The method according to claim 1, wherein the method further comprises:

in a case of power shortage, performing classification and grading according to a level of the load importance degree, and preferentially performing load shedding for a user with a low level of the load importance degree, wherein the load importance degree of each user is obtained by solving an evaluation index of the load importance degree through an order relation method of group evaluation.

9. The method according to claim 1, wherein the method further comprises:

establishing a net present value model of the shared energy storage system according to a cost model of the shared energy storage system and the intraday return objective function of the shared energy storage system participating in energy cooperative scheduling of energy frequency regulation and load demand;

calculating a net return of the shared energy storage system in a whole life cycle according to the net present value model of the shared energy storage system.

10. A shared energy storage scheduling system based on energy frequency regulation and load demand, wherein the system comprises:

an establishing module, configured to establish an objective function of a shared energy storage system participating in cooperative scheduling of energy frequency regulation and load demand;

an input module, configured to input relevant parameters of a grid side, a user side and the shared energy storage system into the objective function;

a solving module, configured to solve the objective function according to an objective function constraint condition and a switching cost of a load importance degree and in combination with a mixed integer linear programming algorithm, to obtain a shared energy storage configuration scheme based on energy frequency regulation and load demand;

a scheduling module, configured to configure the shared energy storage system according to the shared energy storage configuration scheme, and to control the shared energy storage system to participate in energy cooperative scheduling of the grid side and the user side according to a hierarchical control strategy of the shared energy storage system.

Establishing an objective function of a shared energy storage system participating in cooperative scheduling of energy frequency regulation and load demand — S101

Inputting relevant parameters of a grid side, a user side and the shared energy storage system into the objective function — S102

Solving the objective function according to an objective function constraint condition and a switching cost of a load importance degree and in combination with a mixed integer linear programming algorithm, to obtain a shared energy storage configuration scheme based on energy frequency regulation and load demand — S103

Configuring the shared energy storage system according to the shared energy storage configuration scheme, and controlling the shared energy storage system to participate in energy cooperative scheduling of the grid side and the user side according to a hierarchical control strategy of the shared energy storage system — S104

FIG. 1

FIG. 2

FIG. 3

<table>
<tr><td colspan="2" align="center">**INTERNATIONAL SEARCH REPORT**</td><td>International application No.<br>**PCT/CN2023/130847**</td></tr>
</table>

| A. | CLASSIFICATION OF SUBJECT MATTER |
|---|---|

H02J 3/46(2006.01)i; H02J 3/28(2006.01)i; H02J 3/00(2006.01)i; H02J 3/24(2006.01)i; H02J 7/00(2006.01)i

According to International Patent Classification (IPC) or to both national classification and IPC

| B. | FIELDS SEARCHED |
|---|---|

Minimum documentation searched (classification system followed by classification symbols)

IPC，CPC：H02J G06Q

Documentation searched other than minimum documentation to the extent that such documents are included in the fields searched

Electronic data base consulted during the international search (name of data base and, where practicable, search terms used)

CNABS, CNTXT, ENTXT, ENTXTC, CNKI, IEEE: 储能, 共享, 协调, 调度, 负荷, 负载, 切, 削减, 成本, 收益, 目标, 约束, 第二储能, 充电, 放电, 等级, 级别, 优先, 权重, 净现值, energy storage, shared, coordinat+, dispatch+, schedul+, load+, cut+, reduc+, cost, income, profit+, target, goal, constraint+, charg+, discharg+, level+, rank+, scale, weight+, net present value

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115733189 A (CHINA THREE GORGES CORP. et al.) 03 March 2023 (2023-03-03) claims 1-10 | 1-10 |
| Y | CN 114330909 A (XI'AN JIAOTONG UNIVERSITY et al.) 12 April 2022 (2022-04-12) description, paragraphs [0079]-[0215], and figures 1-8 | 1-10 |
| Y | CN 113315143 A (BEIJING BRANCH OF STATE GRID INFORMATION & TELECOMMUNICATION GROUP CO., LTD. et al.) 27 August 2021 (2021-08-27) description, paragraphs [0037]-[0083], and figures 1-4 | 1-10 |
| A | CN 114065109 A (HANGZHOU POWER SUPPLY COMPANY, STATE GRID ZHEJIANG ELECTRIC POWER CO., LTD. et al.) 18 February 2022 (2022-02-18) entire document | 1-10 |
| A | CN 111064188 A (SHANGHAI UNIVERSITY OF ELECTRIC POWER) 24 April 2020 (2020-04-24) entire document | 1-10 |

☑ Further documents are listed in the continuation of Box C.    ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 January 2024** | **16 January 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/130847**

**C.    DOCUMENTS CONSIDERED TO BE RELEVANT**

| Category* | Citation of document, with indication, where appropriate, of the relevant passages | Relevant to claim No. |
|---|---|---|
| A | US 2022284458 A1 (MITSUBISHI ELECTRIC RESEARCH LABORATORIES, INC.) 08 September 2022 (2022-09-08)<br>    entire document | 1-10 |

Form PCT/ISA/210 (second sheet) (July 2022)

INTERNATIONAL SEARCH REPORT
Information on patent family members

International application No.

**PCT/CN2023/130847**

| Patent document cited in search report | | | Publication date (day/month/year) | Patent family member(s) | | | Publication date (day/month/year) |
|---|---|---|---|---|---|---|---|
| CN | 115733189 | A | 03 March 2023 | None | | | |
| CN | 114330909 | A | 12 April 2022 | None | | | |
| CN | 113315143 | A | 27 August 2021 | None | | | |
| CN | 114065109 | A | 18 February 2022 | None | | | |
| CN | 111064188 | A | 24 April 2020 | None | | | |
| US | 2022284458 | A1 | 08 September 2022 | JP | 2022130284 | A | 06 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211432485